# EUROPÄISCHE PATENTSCHRIFT

(11) **EP 0 477 613 B1**
(45) Veröffentlichungstag und Bekanntmachung des Hinweises auf die Patenterteilung: **17.01.1996**
(21) Anmeldenummer: 91114937.5
(22) Anmeldetag: 04.09.1991
(51) Int. Cl.: H04Q 11/04

(54) **Verfahren zum gleichmässigen Selektieren von in einem Kommunikationssystem auftretenden Ereignissen**
Procedure for the consistent selection of events occuring in a communications system
Procédé pour la sélection uniforme des événements se produisent dans un système de communication

(30) Priorität: 27.09.1990 DE 4030606
(43) Veröffentlichungstag der Anmeldung: 01.04.1992
(73) Patentinhaber: SIEMENS AKTIENGESELLSCHAFT, D-80333 München (DE)
(72) Erfinder: Kaufel, Wolfgang, Dipl. Math., W-1000 Berlin 37 (DE); Schwenk-Schellschmidt, Angela, Dr. rer. nat., W-1000 Berlin 12 (DE)

(56) Entgegenhaltungen:
- EP-A- 0 134 010
- EP-A- 0 163 103
- EP-A- 0 340 665
- PROCEEDINGS, TENTH INTERNATIONAL TELETRAFFIC CONGRESS, 9-15 JUNI 1983, SITZUNG 5.2 VORTRAG 3 SEITEN 1-6, MONTRéAL CN F.C. SCHOUTE 'Adaptive Overload Control for an SPC Exchange'
- ELECTRONIC SWITCHING, GRINSEC, 1983, SEITEN 411-415, ELSEVIER, AMSTERDAM NL Ein ]bersetzung von "La commutation electronique" 1981, Teil IV "Call Processing", Kapitel 1 absatz 8, "Traffic Supervision and Load Control"
- PROCEEDINGS, IEEE INTERNATIONAL CONFERENCE ON COMMUNICATIONS, 7-10 JUNI 1987, BAND 2 SEITEN 1111-1117, SEATTLE US M. KRYM ET AL 'DMS-100 New Peripheral Overload Control Modeling'
- CONFERENCE RECORD, IEEE INTERNATIONAL CONFERENCE ON COMMUNICATIONS, 16-18 JUNE 1975, SEITEN 14-12 - 14-17, SAN FRANCISCO US G.W. HASSELL ET AL 'Load and Network Control in ETS-4'

## Beschreibung

In Kommunikationssystemen, insbesondere in Kommunikationsvermittlungsanlagen werden auftretende Ereignisse, z. B. an einer Kommunikationsvermittlungsanlage von Kommunikationsendgeräten und Verbindungsleitungen ankommende Verbindungsaufbauanforderungen, gesammelt und im Sinne einer weiteren Verarbeitung bzw. einer Initialisierung einer weiteren Aktivität an eine Verarbeitungs-bzw. Steuereinrichtung, bei einer Kommunikationsvermittlungsanlage beispielsweise an den Vermittlungsrechner, geführt. Aus derartigen Ereignisströmen sind bei spezifizierten Kommunikationssystem-Betriebszuständen, z. B. bei einer dynamischen Überlastung des Vermittlungsrechners, Ereignisse, z. B. Verbindungaufbauanforderungen, möglichst gleichmäßig aus dem Ereignisstrom zu selektieren, wobei die selektierten Ereignisse in Ereignisse einer ersten Kategorie und die nicht selektierten Ereignisse in Ereignisse einer zweiten Kategorie aufgeteilt sind.
Beispielsweise werden bei dynamischer Überlastung des Vermittlungsrechners aus dem im Kommunikationssystem zusammengefaßten Verbinaungsaufbauanforderungsstrom gleichmäßig Verbindungsaufbauanforderungen selektiert und abgewiesen, d. h. es wird kein Verbindungsaufbau zu dem in der Verbindungsaufbauanforderung angegebenen Kommunikationsendgerät eingeleitet und an das die jeweilige Verbindungsaufbauanforderung übermittelnde Kommunikationsendgerät wird beispielsweise eine "Besetzt"-Information übermittelt. Die nicht selektierten Verbindungsaufbauanforderungen werden weiterbearbeitet, d. h. zu einem Ziel-Kommunikationsendgerät weitervermittelt.
Die Anzahl der zu selektierenden Ereignisse wird üblicherweise durch eine prozentuale ganzzahlige Information angegeben. Beispielsweise wird in einer Kommunikationsvermittlungsanlage bei einer vorgegebenen Höhe der dynamischen Überlastung des Vermittlungsrechners durch die Angabe eines Prozentsatzes von 25 % bestimmt, daß 25 % aller ankommenden Verbindungsaufbauanforderungen abgewiesen und die restlichen 75 % der Verbindungsaufbauanforderungen angenommen d.h. weitervermittelt werden.

Die Selektierung wird üblicherweise in der Weiterverarbeitungseinrichtung, z.B. dem Vermittlungsrechner per Programm durchgeführt. Hierbei werden gemaß einem allgemein bekannten Verfahren jeweils die selektierten Ereignisse aufsummiert und durch die Summe aller ankommenden Ereignisse dividiert. Der Quotient gibt hierbei das Verhältnis von selektierten zur Summe aller Ereignisse in einem Dezimalbruch an. Bei einer Realisierung per Programm sind hierbei zwei Zahler für die Aufsummierung der selektierten sowie aller Ereignisse erforderlich.
Des weiteren muß in einer Weiterverarbeitungseinrichtung, z.B. im Vermittlungsrechner, eine diese dynamisch stark belastende Division oder eine - in der digitalen Informationsverarbeitung auch - eine Multiplikation nach jedem Eintreffen eines Ereignisses durchgeführt werden. Zusätzlich ist zu berücksichtigen, daß durch die kontinuierliche Aufsummierung für die Zähler eine Zählerüberlaufbehandlung vorzusehen ist.

Aus der europäischen Patentanmeldung 0 163 103 A1 ist eine Schaltungsanordnung für Fernmeldevermittlungsanlagen bekannt, die durch eine in ihrem Zahlvolumen begrenzte Zähleinrichtung gebildet ist, in der bei jeder Verarbeitungsanforderung eine dem Prozentsatz entsprechende Anzahl von Zählimpulsen gezählt und an eine durch Schieberegister gebildete Zahlschaltung gesteuert werden. Erreicht der Zählerstand der Zahlschaltung das Zahlvolumen, wird die Zählschaltung zurückgesetzt und über den Nullstand zyklisch weitergeschaltet. Bei einem Überlauf wird ein Befehl zur Abweisung einer Verarbeitungsanforderung gegeben. Die Schaltungsanordnung bzw. die stimmt, daß 25 % aller ankommenden Verbindungsaufbauanforderungen abgewiesen und die restlichen 75 % der Verbindungsaufbauanforderungen angenommen d. h. weitervermittelt werden.

Die Selektierung wird üblicherweise in der Weiterverarbeitungseinrichtung, z. B. dem Vermittlungsrechner per Programm durchgeführt. Hierbei werden gemäß einem allgemein bekannten Verfahren jeweils die selektierten Ereignisse aufsummiert und durch die Summe aller ankommenden Ereignisse dividiert. Der Quotient gibt hierbei das Verhältnis von selektierten zur Summe aller Ereignisse in einem Dezimalbruch an. Bei einer Realisierung per Programm sind hierbei zwei Zähler für die Aufsummierung der selektierten sowie aller Ereignisse erforderlich.
Des weiteren muß in einer Weiterverarbeitungseinrichtung, z. B. im Vermittlungsrechner, eine diese dynamisch stark belastende Division oder eine - in der digitalen Informationsverarbeitung auch - eine Multiplikation nach jedem Eintreffen eines Ereignisses durchgeführt werden. Zusätzlich ist zu berücksichtigen, daß durch die kontinuierliche Aufsummierung für die Zähler eine Zählerüberlaufbehandlung vorzusehen ist.

Die der Erfindung zugrunde liegende Aufgabe besteht darin, die dynamische Belastung der die Selektion von Ereignisströmen durchführenden Verarbeitungseinrichtungen eines Kommunikationssystems zu reduzieren. Die Aufgabe wird durch die Merkmale des Anspuchs 1 gelöst.
Der wesentliche Aspekt des erfindungsgemäßen Verfahrens ist darin zu sehen, daß die gleichmäßige Selektierung der Ereignisse gemäß einem vorgegebenen Prozentsatzwert lediglich mit Hilfe von die Verarbeitungseinrichtung dynamisch gering belastende Additionen und Subtraktionen bewerkstelligt wird und eine weitere Reduzierung der dynamischen Belastung durch die Einsparung eines Zählers bzw. eines einen Zähler realisierenden Programms erreicht wird. Dadurch, daß der Zählerstand nur ganzzahlige Zahlenwerte zwischen 0 und 300 annehmen kann, entfällt des weiteren ein Programm für die Zählerüberlaufbehandlung.

Ein wesentlicher Vorteil der Erfindung ist darin zu sehen, daß neben den erheblichen Reduzierungen der dynamischen Belastung der die Selektionen durchführenden Verarbeitunseinrichtungen zusätzlich wesentlich verkürzte Verarbeitungszeiten für die Selektionsvorgänge erreicht werden. Diese Verkürzung wird im wesentlichen durch den Wegfall von Programmen für die Behandlung eines zweiten Zählers und der für beide Zähler vorgesehenen Zählerüberlaufbehandlung bewirkt.
Nach einer vorteilhaften Ausgestaltung des erfindungsgemäßen Verfahrens - Anspruch 2 - wird bei der Initialisierung der Zähleinrichtung ein die Position der Ereignisse im Ereignisstrom hinsichtlich der Kategoriezugehörigkeit beeinflussender Beginnzählerstand eingestellt. Hierdurch ist festlegbar, ob die Selektion mit Ereignissen der ersten oder zweiten Kategorie begonnen wird. Besonders vorteilhaft wird das erfindungsgemäße Verfahren bei einer dynamischen Überlastung der zentralen Steuereinrichtung bzw. des Vermittlungsrechners einer Kommunikationsvermittlungsanlage angewandt - Anspruch 3. Hierbei werden die von Kommunikationsendgeräten an eine Kommunikationsvermittlungsanlage übermittelten Verbindungsaufbauanforderungen in dieser seriell zu einem Verbindungsaufbauanforderungsstrom zusammengefaßt und anschließend die Verbindungsaufbauanforderungen einer ersten Kategorie selektiert.
Hierbei werden die Verbindungsaufbauanforderungen der ersten Kategorie im Sinne der dynamischen Überlastabwehr der zentralen Steuereinrichtung der Kommunikationsvermittlungsanlage abgewiesen, d. h. der Verbindungsaufbau zu einem in der Verbindungsaufbauanforderung definierten Zielkommunikationsendgerät wird unterbrochen. Als weitere vermittlungstechnische Reaktion kann an das die aktuelle Verbindungsaufbauanforderung übermittelnde Kommunikationsendgerät eine die Überlastsituation anzeigende Information oder die bekannte "Besetzt"-Information übermittelt werden. Alternativ hierzu ist die selektierte Verbindungsaufbauanforderung an eine Ansageeinrichtung umsteuerbar - Anspruch 7. Mit Hilfe dieser Ansageeinrichtung wird an das die Verbindungsaufbauanforderung übermittelnde Kommunikationsendgerät eine die Überlastsituation der zugeordneten Kommunikationsvermittlungsanlage anzeigende Sprachinformation übermittelt.
Das Selektieren von Verbindungsaufbauanforderungen kann im Sinne einer gezielten Überlastabwehr nicht nur in der zentralen Steuereinrichtung sondern bereits in leitungs- und verkehrskonzentrierenden Vorfeld- bzw. Peripherieeinrichtungen der Kommunikationsvermittlungsanlage durchgeführt werden - Anspruch 4. Hierbei werden beispielsweise in einer Leitungsanschlußgruppe die an diese von den angeschlossenen Kommunikationsendgeräten übermittelten Verbindungsaufbauanforderungen zu einem Verbindungsaufbauanforderungsstrom zusammengefaßt und entsprechend dem angegebenen Prozentwert die Verbindungsaufbauanforderungen gleichmäßig selektiert, die abgewiesen werden. Die nicht selektierten Verbindungsaufbauanforderungen - entsprechen der zweiten Kategorie von Ereignisse - werden akzeptiert, d. h. weitervermittelt.
Dies bedeutet, daß für Teilnehmeranschlußgruppen, an die ständig oder zeitweise vermehrt Verbindungsaufbauanforderungen übermittelt werden, gezielt eine Überlastabwehr durchgeführt werden kann. Hierbei kann durch Zuordnen unterschiedlicher Prozentwerte zu den Teilnehmeranschlußgruppen die dynamische Belastung insbesondere der zentralen Steuereinrichtung, aber auch der peripheren Steuereinrichtungen, gezielt reduziert werden. Die Höhe des Prozentwertes ist vorteilhaft in Abhängigkeit von der Höhe der dynamischen Belastung der zentralen oder dezentralen Einrichtungen des Kommunikationssystems zu ermitteln bzw. zu bestimmen - Anspruch 5. Der Prozentwert ist entweder individuell für jede Vorfeld- bzw. Perpherieeinrichtung in Abhängigkeit von der Höhe der dort auftretenden dynamischen Belastung oder in der zentralen Steuereinrichtung unter Berücksichtigung der Höhe der dynamischen Belastung der zentralen Steuereinrichtung zu ermitteln bzw. zu bestimmen. Auch eine Kombination der beiden Ermittlungsverfahren - zentral oder dezentral - ist insbesonders für sehr große Kommunikationsvermittlungsanlagen vorteilhaft.
Nach einer weiteren vorteilhaften Ausgestaltung des erfindungsgemäßen Verfahrens können die Verbindungsaufbauanforderungen jeweils gesprächsartenspezifisch, dienstespezifisch, verbindungsleitungsspezifisch, intern-/externverkehrsspezifisch zu einem Verbindungsaufbauanforderungsstrom zusammengefaßt und die abzuweisenden Verbindungsaufbauanforderungen selektiert werden.
Durch diese Art der Selektierung kann eine gezielte Überlastabwehr für unterschiedliche Gesprächsarten, verschiedene Dienste, unterschiedliche Bündel von Verbindungsleitungen - einschließlich der Umweglenkung - und für Intern-/Externverkehr durchgeführt werden. Voraussetzung hierfür ist, daß die Verbindungsaufbauanforderungen vor der Selektierung spezifisch gesammelt werden.

Im folgenden wird das erfindungsgemäße Verfahren anhand eines Blockschaltbildes und eines Ablaufdiagrammes näher erläutert.

Dabei zeigen
- Figur 1: ein Blockschaltbild einer Kommunikationsvermittlungsanlage einschließlich Kommunikationsendgeräte - Anschlußbereich und
- Figur 2: ein Ablaufdiagramm des in der Kommunikationsvermittlungsanlage implementierten erfindungsgemäßen Verfahren.

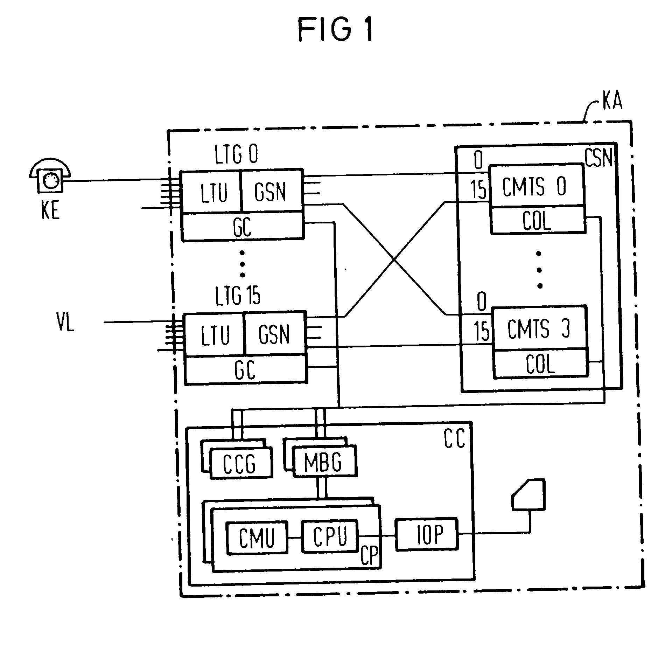

Figur 1 zeigt beispielhaft ein dem erfindungsgemäßen Verfahren zugrunde liegendes Kommunikationssystem, daß durch eine Kommunikationsvermittlungsanlage KA und durch an sie angeschlossene Kommunikationsendgeräte KE gebildet wird. Die Kommunikationsvermittlungsanlage KA ist im wesentlichen in drei hierarchische Strukturebenen unterteilt. Die im wesentlichen dem Anschluß von Kommunikationsendgeräten und Verbindungleitungen dienende Peripherieebene wird durch maximal 16 Anschlußgruppen LTG0...LTG15 gebildet. Die Anschlußgruppen LTG0...LTG15 stellen die Bindeglieder zu den Kommunikationsendeinrichtungen sowie für die Vernetzung der weiteren Kommunikationsvermittlungsanlagen dar. Zusätzlich zu analogen und digitalen Kommunikationsendgeräten KE und analogen bzw. digitalen Verbindungsleitungen VL sind an eine Anschlußgruppe LTG0...LTG15 Vermittlungsplätze und Testeinrichtungen anschließbar.
Eine Anschlußgruppe LTG umfaßt zumindest eine Anschlußeinheit LTU, eine Gruppenkoppelstufe GSN sowie eine Gruppensteuerung GC. Die Anschlußeinheiten LTU können beispielsweise dem Anschluß analoger Kommunikationsendgeräte KE dienen. Sie weisen dann üblicherweise je Endgerät die Schnittstelleneinrichtung mit Ruf- und Schleifenschlußindikation auf, der jeweils eine Prozessoreinrichtung zur Digital/Analog - bzw. Analog/Digital - Wandlung und zur Einstellung der programmierbaren Eingangsimpedanz bzw. Pegelanpassung zugeordnet ist. Eine Anschlußeinheit LTU ist über eine 2,048 KBit/s - Schnittstelle nicht dargestellt - mit der Gruppenkoppelstufe GSN für die Übermittlung von PCM-orientierten Sprachinformationen und über eine 64 kbit/s-Schnittstelle - nicht dargestellt - mit der Gruppensteuerung GC für die Übermittlung von Steuerinformationen verbunden.
Die Gruppenkoppelstufe GSN stellt eine blockierungsfreie Zeitkoppelstufe mit 16 Eingängen mit 2084 kbit/s dar. In der nach dem Zeitmultiplexverfahren realisierten Gruppenkoppelstufe GSN werden die ankommenden Sprachinformationen entweder intern in der jeweiligen Anschlußgruppe LTG oder an die zentrale Koppelstufe CSN gesteuert.
In der Gruppensteuerung GC werden maximal 8 mit den Anschlußeinheiten LTU0...LTU7 verbundene 64 kbit/s - Leitungen über eine Signalmultiplexeinrichtung an eine Prozessoreinrichtung gesteuert. Diese Prozessoreinrichtung ist beispielsweise durch den Siemens Switching-Prozessor SSP 302D realisiert.
Der Gruppensteuerung sind folgende Aufgaben zugeordnet:
- Abtasten der 64 kbit/s - Steuerleitungen,
- Steuern des Informationsaustausches, insbesondere das Umwandeln der externen Schaltkennzeichen von den Teilnehmer- und Verbindungsleitungen in interne Normmeldungen für die Zentralsteuerung und umgekehrt,
- Sicherheitstechnische Überprüfungen der Anschlußeinheit sowie Takt- und Tongeneratoren,
- Überwachen der Gruppenkoppelstufenfunktionen, insbesondere Durchschalteprüfung und Überwachung der Meldungen von und zu der Zentralsteuerung CC und
- Abtasten der Alarmindikationsstellen der Übertragungsstrecken,
insbesondere der PCM-Übertragungsstrecken.
Die zentrale Koppelstufe CNS stellt wie die Gruppenkoppelstufe GSN eine Zeitkoppelstufe mit vollständiger Erreichbarkeit dar. Die zentrale Koppelstufe ist aus ein bis maximal vier gleichen Zeitstufeneinheiten gebildet, die bis auf einen Konferenzspeicher und schaltbare Dämpfungen mit der Gruppenkoppelstufe GSN indentisch sind. Mit Hilfe der zentralen Koppelstufe CNS werden die Verbindungen zwischen den verschiedenen Anschlußgruppen LTG0...LTG15 hergestellt. Der gesamte ankommende Sprachverkehr zwischen den Anschlußgruppen LTG0...LTG15 wird gleichmäßig auf die vier Zeitstufeneinheiten verteilt. Bei Ausfall einer Zeitstufe wird deren Verkehr - ein viertel des Gesamtverkehrs - auf die drei verbleibenden Zeitstufeneinheiten umgesteuert. Die Zentral steuerung CC ist durch
- einen Zentralprozessor CP, der aus einer Zentralprozesssoreinheit CPO und einer zentralen Speichereinheit CMU besteht,
- einer Nachrichtenverteilerbaugruppe MBG,
- einer zentralen Taktgebereinrichtung CCG sowie
- einem Ein-/Ausabeprozessor IOP gebildet,
- wobei alle Komponenten der Zentralsteuerung CC - außer dem zentralen Taktgeber CCG - über ein zentrales Bussystem verbunden sind. Der Zentralprozessor ist durch den Siemens Switching-Prozessor SSP 303 realisiert. Die vermittlungs-, betriebs- und sicherheitstechnischen Programme sind in der zentralen Speichereinheit CMU gespeichert. Die maximale Daten- und Programmspeicherkapazität ist hierbei mit 1 Megabit vorgesehen.

Die Nachrichtenverteilergruppe MBG bildet für den Zentralprozessor CP die Schnittstelle zur zentralen Koppelstufe CSN und zu den Anschlußgruppen LTG0...LTG15. In der Nachrichtenverteilergruppe MBG werden die Informationen vorübergehend gespeichert und die von den peripheren Einrichtungen übermittelten Informationen in Format und Geschwindigkeit den Bedingungen des Zentralprozessors angepaßt. Über die Verbindungen zur zentralen Koppelstufe werden die der Steuerung der zentralen Zeitstufeneinheiten dienenden Kommandos für den Aufbau und das Auslösen von Verbindungen sowie Quittierungsinformationen übertragen.
Periphere Einrichtungen werden über die Ein-/Ausgabeeinrichtungen IOP mit dem Zentralprozessor CP verbunden. Derartige periphere Einrichtungen sind beispielsweise Speichereinrichtungen wie Floppy - Disk. Über eine ebenfalls über eine Ein-/Ausgabeeinrichtung IOP realisierte V24./RS232-Schnittstelle kann ein Betriebstechnikendgerät, z. B. ein Bildschirmterminal, angeschlossen werden.

Die Kommunikationsvermittlungsanlage KA wird von einem duplizierten zentralen Taktgenerator CCG über eine in diesem realisierte Taktverteileinrichtung mit den entsprechenden Taktsignalen versorgt. Hierbei wird ein Taktgenerator als Betriebstaktgenerator bestimmt und die Taktsignale des duplizierten Taktgenerators werden synchron zu den Taktsignalen des Betriebstaktgenerators gehalten. Durch die Synchronisation der Taktgeneratoren werden bei einer Umschaltung auf den duplizierten Taktgenerator Taktsignal-Phasernsprünge vermieden.
In der Gruppen- und in der Zentralsteuerung GC,CC sind vermittlungstechnische, betriebs- und sicherheitstechnische Programme implementiert. Die vermittlungstechnischen Programme umfassen hierbei die Steuerung aller vermittlungstechnischen Funktionen, wie z. B. Auf- und Abbau von Verbindungen. Als Anreize für den Ablauf von vermittlungstechnischen Programmen werden von den Gruppensteuerungen GC zur Zentralsteuerung CC Zustandsänderungen der Peripherie übermittelt. Im Zentralprozessor CC werden diese Anreize bewertet und entrsprechende Steuerinformationen bzw. Anweisungen gebildet, die an die Gruppensteuerungen GC bzw. an die zentrale Koppelstufe CSN übermittelt werden.
Für die Bewertung der Anreize sowie das Bilden von Anweisungen sind Informationen erforderlich, die in einer "sogenannten" Datenbasis hinterlegt sind. Derartige Informationen sind beispielsweise Leitungs- oder Rufnummern, Berechtigungen usw.
Das erfindungsgemäße Verfahren ist als Programmodul eines vermittlungstechnischen Programms sowohl in der Gruppensteuerung GC als auch in der Zentralsteuerung CC realisierbar.

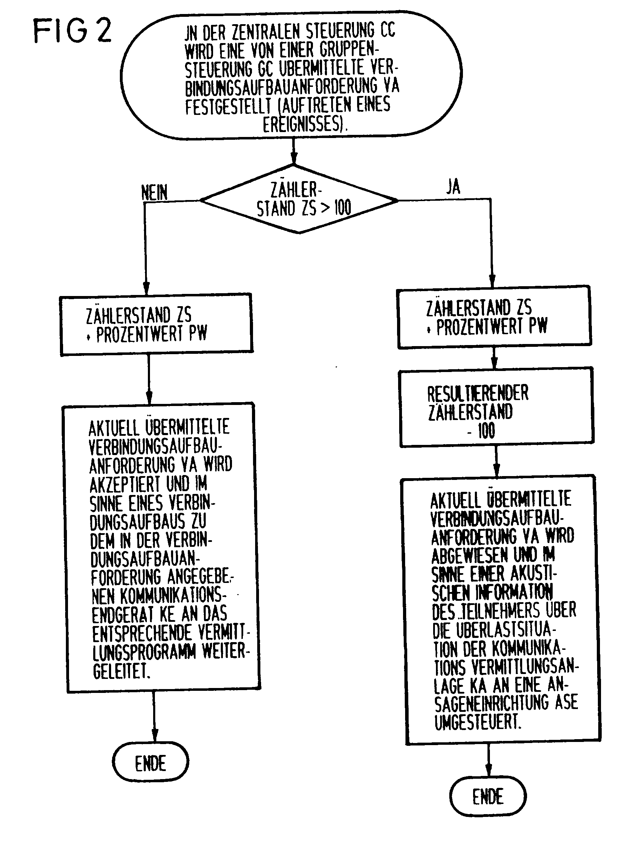

In Figur 2 ist das vorzugsweise durch ein Programm realisierte erfindungsgemäße Verfahren durch ein Ablaufdiagramm dargestellt. Für das Ausführungsbeispiel sei angenommen, daß alle an der Zentralsteuerung CC ankommenden Verbindungsaufbauanforderungen zu einem Verbindungsaufbauanforderungsstrom zusammengefaßt werden. Für das Ausführungsbeispiel sei des weiteren angenommen, daß die Zentralsteuerung CC derart durch ankommende Verbindungsanforderungen überlastet ist, daß 25 % aller ankommenden Verbindungsanforderungen abgewiesen, d. h. selektiert werden sollen. Dem Prozentsatz ist somit der Prozentwert 25 zugeordnet. Werden die Verbindungsaufbauanforderungen anschlußgruppenindividuell zusammengefaßt, so kann das erfindungsgemäße Verfahren in den Gruppensteuerungen GC angewandt werden. Hierbei wird in der Zentralsteuerung CC in Abhängigkeit von der Anzahl der von den Anschlußgruppen LTG übermittelten Verbindungsaufbauanforderungen jeweils ein anschlußgruppenindividueller Prozentsatz ermittelt und im Sinne einer Hinterlegung jeweils an einen hierfür vorgesehen Speicher der Gruppensteuerungen GC übermittelt.

Der Prozentsatz kann je nach der Höhe der Überlastung der Kommunikationsvermittlungsanlage KA in der Zentralsteuerung CC neu berechnet und an die Gruppensteuerungen GC übermittelt werden. Sollen insbesondere den externen Verkehr betreffende Verbindungsaufbauanforderungen mit Hilfe des erfindungsgemäßen Verfahrens abgewiesen werden, so sind diese den externen Verkehr betreffenden Verbindungsaufbauanforderungen separat zu einem Verbindungsaufbauanforderungsstrom zusammenzufassen und entsprechend dem vorgegebenen Prozentsatz die abzuweisenden Verbindungsaufbauanforderungen zu selektieren.

## Patentansprüche

1. Verfahren zum gleichmäßigen Selektieren von Ereignissen (VA) aus in einem Kommunikationssystem mit einer programmgesteuerten Vermittlungssteuereinrichtung auftretenden sowie vermittlungstechnische und/oder betriebs- und/ oder sicherheitstechnische Ereignisse enthaltenden Ereignisstrom mit Hilfe eines Zählers,
- wobei das Verhältnis der Ereignisse (VA), die zu selektieren sind, zur Summe der Ereignisse (VA) durch einen ganzzahligen Prozentsatz bestimmt werden,
dadurch **gekennzeichnet**,
- daß die Ereignisse (VA) von der Vermittlungssteuereinrichtung (CC) mit Hilfe eines programmtechnisch realisierten Zählers selektiert werden,
- daß bei jedem Auftreten eines Ereignisses (VA) der Zählerstand (ZS) durch lediglich Additionen und Subtraktionen derart erhöht oder erniedrigt wird,
- daß bei einem Zählerstand (ZS) größer 100 dieser um den Prozentwert (PW) erhöht sowie anschließend dieser um den Zahlenwert 100 erniedrigt wird und das aktuell auftretende Ereignis (VA) als selektiertes einer ersten Ereigniskategorie angehörendes Ereignis (VA) bestimmt sowie eine der ersten Ereigniskategorie zugeordnete vermittlungs-, betriebs- oder sicherheitstechnische Weiterverarbeitung des aktuellen Ereignisses (VA) eingeleitet wird, und
- daß bei einem Zählerstand (ZS) kleiner oder gleich 100 dieser um den Prozentwert (PW) erhöht wird und das aktuell auftretende Ereignis (VA) als nicht selektiertes, einer zweiten Ereigniskategorie angehörendes Ereignis bestimmt und eine der zweiten Ereigniskategorie zugeordnete weitere vermittlungs-, betriebs- oder sicherheitstechnische Weiterverarbeitung eingeleitet wird.

2. Verfahren nach Anspruch 1, dadurch **gekennzeichnet**, daß bei Initialisierung des Zählers eine die Position der Ereignisse (VA) im Ereignisstrom hinsichtlich der Ereigniskategoriezugehörigkeit beeinflussender Beginnzählerstand eingestellt wird.

3. Verfahren nach mindestens einem der vorhergehenden Ansprüche, dadurch **gekennzeichnet**, daß die Ereignisse (VA) an Kommunikationsanschlüssen einer Kommunikationsvermittlungsanlage (KA) ankommende Verbindungsaufbauanforderungen repräsentieren und aus dem daraus resultierenden Verbindungsaufbauanforderungsstrom im Sinne einer dynamischen Überlastabwehr jeweils die Verbindungsaufbauanforderungen (VA) - erste Ereigniskategorie - selektiert werden, die abgewiesen werden und die nicht selektierten Verbindungsaufbauanforderungen (VA) - zweite Ereigniskategorie - im Sinne einer weiteren Vermittlung akzeptiert werden.

4. Verfahren nach Anspruch 3,
**dadurch gekennzeichnet**, daß das Zusammenfassen von Verbindungsaufbauanforderungen (VA) zu einem Verbindungsaufbauanforderungsstrom und das Selektieren von Verbindungs aufbauanforderungen (VA) im Sinne einer gezielten Überlastabwehr in den leitungs- und verkehrskonzentrierenden Vorfeld- bzw. Peripherieeinrichtungen (LTG) der Kommunikationsvermittlungsanlage (KA) durchführbar ist.

5. Verfahren nach mindestens einem der Ansprüche 3 oder 4,
**dadurch gekennzeichnet**, daß der das Verhältnis von Ereignissen (VA) der ersten Kategorie zur Summe aller Ereignisse (VA) angebende Prozentsatz in Abhängigkeit von der Höhe der dynamischen Überlastung der zentralen und/oder dezentralen Steuereinrichtungen (GC, CC) der Kommunikationsvermittlungsanlage (KA) ermittelt bzw. bestimmt wird.

6. Verfahren nach mindestens einem der Ansprüche 3 bis 5,
**dadurch gekennzeichnet**, daß die Verbindungsaufbauanforderungen (VA) jeweils gesprächsartenspezifisch, dienstespezifisch, verbindungsleitungsspezifisch, intern-/externverkehrsspezifisch zu einem Verbindungsaufbauanforderungsstrom zusammengefaßt und aus diesem die abzuweisenden, spezifizierten Verbindungsaufbauanforderungen selektiert werden.

7. Verfahren nach mindestens einem der Ansprüche 3 bis 6,
**dadurch gekennzeichnet**, daß die abgewiesenen Verbindungsaufbauanforderungen (VA) im Sinne einer Übermittlung einer die Überlastsituation der Kommunikationsvermittlungsanlage (KA) beinhaltende Sprachinformation an eine Ansageeinrichtung (ASE) umsteuerbar sind.

## Claims

1. Method for uniform selection of events (VA) from an event flow which contains events which occur in a communications system having a program-controlled switching control device as well as switching events and/or operating events and/or safety events, with the aid of a counter,
- the ratio of the events (VA) which are to be selected to the sum of the events (VA) being determined by an integer percentage,
characterized
- in that the events (VA) are selected by the switching control device (CC) with the aid of a counter which is implemented in the form of a program,
- in that, whenever an event (VA) occurs, the count (ZS) is increased or decreased only by additions and subtractions in such a manner
- that, in the event of a count (ZS) which is greater than 100, this count (ZS) is increased by the percentage value (PW) and, subsequently, this count (ZS) is reduced by the count 100, and the currently occurring event (VA) is determined as a selected event (VA) belonging to a first event category, and a stage of further processing for switching, operating or safety reasons, which is assigned to the first event category, of the current event (VA) is initiated, and
- that, in the case of a count (ZS) which is less than or equal to 100, this count (ZS) is increased by the percentage value (PW) and the currently occurring event (VA) is determined as a non-selected event belonging to a second event category, and a further stage of further processing for switching, operating or safety, which is assigned to the second event category, is initiated.

2. Method according to Claim 1, characterized in that, when the counter is initialized, an initial count is set which influences the position of the events (VA) in the event flow in terms of the event category association.

3. Method according to at least one of the preceding claims, characterized in that the events (VA) represent connection setting-up requests arriving at communications connections of a communications exchange (KA), and those connection setting-up requests (VA) - first event category - are in each case selected from the connection setting-up request flow resulting therefrom in the sense of dynamic overload protection, these requests being rejected, and the non-selected connection setting-up requests (VA) - second event category - are accepted in the sense of further switching.

4. Method according to Claim 3, characterized in that the combination of connection setting-up requests (VA) for a connection setting-up request flow, and the selection of connection setting-up requests (VA) in the sense of deliberate overload protection can be carried out in the line-concentrating and traffic-concentrating remote devices and peripheral devices (LTG) of the communications exchange (KA) .

5. Method according to at least one of Claims 3 or 4, characterized in that the percentage which indicates the ratio of events (VA) of the first category to the sum of all the events (VA) is determined or defined as a function of the magnitude of the dynamic overload of the central and/or distributed control devices (GC, CC) of the communications exchange (KA).

6. Method according to at least one of Claims 3 to 5, characterized in that the connection setting-up requests (VA) are in each case combined in a call-type-specific, service-specific, connecting-line-specific, internal/external-traffic-specific manner to form a connection setting-up request flow, and the connection-setting-up requests which are specified and are to be rejected are selected from said flow.

7. Method according to at least one of Claims 3 to 6, characterized in that the rejected connection setting-up requests (VA) can be reversed in the sense of transmitting voice information, which includes the overload situation of the communications exchange (KA), to an announcement device (ASE).

## Revendications

1. Procédé de sélection uniforme d'évènements (VA) dans un flux d'évènements apparaissant dans un système de communication, qui comporte un dispositif de commande de commutation programmé, et comprenant des évènements relatifs à la technique de commutation et/ou à la technique de fonctionnement et/ou à la technique de sécurité, à l'aide d'un compteur,
- le rapport des évènements (VA), qui sont à sélectionner, à la somme des évènements (VA) étant déterminée par un pourcentage entier,
caractérisé en ce que,
- on sélectionne les évènements (VA) par un dispositif (CC) de commande de commutation à l'aide d'un compteur mis en oeuvre en technique des programmes,
- on augmente ou on diminue l'état (ZS) du compteur exclusivement par des additions et des soustractions, chaque fois qu'un évènement (VA) se produit, de telle sorte que
- si un état (ZS) du compteur est plus grand que 100, on augmente celui-ci du pourcentage (PW), on le diminue ensuite de la valeur numérique 100, on détermine l'évènement (VA) se produisant actuellement comme évènement (VA) sélectionné appartenant à une première catégorie d'évènements et on déclenche un retraitement, associé à la première catégorie d'évènements et relatif à la technique de commutation, de fonctionnement ou de sécurité, de l'évènement (VA) actuel, et
- si un état (ZS) du compteur est inférieur ou égal à 100, on augmente celui-ci du pourcentage (PW), on détermine l'évènement (VA) se produisant actuellement comme évènement non sélectionné appartenant à une seconde catégorie d'évènements et on déclenche un autre retraitement associé à la seconde catégorie d'évènements et relatif à la technique de commutation, de fonctionnement ou de sécurité.

2. Procédé suivant la revendication 1, caractérisé en ce que lors de l'initialisation du compteur, on règle un état initial du compteur influençant la position des évènements (VA) dans le flux d'évènements du point de vue de l'appartenance à une catégorie d'évènements.

3. Procédé suivant au moins l'une des revendications précédentes, caractérisé en ce que les évènements (VA) représentent des demandes d'établissement de liaison arrivant à des raccordements de communication d'une installation (KA) de commutation de communication et on sélectionne, dans le flux des demandes d'établissement de liaison en résultant les demandes (VA) d'établissement de liaison - première catégorie d'évènements - , que l'on a refusées, en vue d'une protection dynamique contre les surcharges et on accepte les demandes (VA) d'établissement de liaison non sélectionnées - seconde catégorie d'évènements - en vue d'une commutation postérieure.

4. Procédé suivant la revendication 3, caractérisé en ce que l'on peut effectuer le rassemblement de demandes (VA) d'établissement de liaison en un flux de demandes d'établissement de liaison et la sélection de demandes (VA) d'établissement de liaison en vue d'une protection ciblée contre les surcharges dans les dispositifs (LTG) de graphique ou de périphérie concentrant des lignes ou du trafic de l'installation (KA) de commutation de communication.

5. Procédé suivant au moins l'une des revendications 3 ou 4, caractérisé en ce que l'on établit ou l'on détermine le pourcentage indiquant le rapport d'évènements (VA) de la première catégorie à la somme de tous les évènements (VA) en fonction de la grandeur de la surcharge dynamique des dispositifs (GC, CC) centralisés et/ou décentralisés de l'installation (KA) de commutation de communication.

6. Procédé suivant au moins l'une des revendications 3 à 5, caractérisé en ce que l'on rassemble les demandes (VA) d'établissement de liaison en fonction du type de conversation, du service, de la ligne de liaison, du trafic interne/externe, en un flux de demandes d'établissement de liaison et on sélectionne dans celui-ci les demandes d'établissement de liaison spécifiées à refuser.

7. Procédé suivant au moins l'une des revendications 3 à 6, caractérisé en ce que l'on peut renvoyer les demandes (VA) d'établissement de liaison refusées en vue d'une transmission d'une information vocale contenant la situation de surcharge de l'installation (KA) de commutation de communication à un dispositif (ASE) d'annonces parlées.
